## Europäisches Patentamt
## European Patent Office
## Office européen des brevets

(19)

(11) Veröffentlichungsnummer: **0 027 575**
**B2**

(12)

# NEUE EUROPÄISCHE PATENTSCHRIFT

(45) Veröffentlichungstag der neuen Patentschrift:
08.03.89

(51) Int. Cl.⁴: **B 29 C 49/78**

(21) Anmeldenummer: **80105926.2**

(22) Anmeldetag: **30.09.80**

(54) **Vorrichtung zum Regeln der Förderleistung eines Extruders.**

(30) Priorität: **09.10.79 DE 2940904**

(43) Veröffentlichungstag der Anmeldung:
**29.04.81 Patentblatt 81/17**

(45) Bekanntmachung des Hinweises auf die Patenterteilung:
**12.10.83 Patentblatt 83/41**

(45) Bekanntmachung des Hinweises auf die Entscheidung
über den Einspruch:
**08.03.89 Patentblatt 89/10**

(84) Benannte Vertragsstaaten:
**BE CH DE FR GB LI**

(56) Entgegenhaltungen:
**DE-B-1 529 787**
**DE-B-2 544 609**
**DE-B-2 558 780**
**US-A-3 759 648**

(73) Patentinhaber: **MOOG GmbH, Hanns- Klemm- Strasse 28, D-7030 Böblingen (DE)**

(72) Erfinder: **Handte, Herbert, Holzwiesenstrasse 2, D-7024 Filderstadt 4 (DE)**

(74) Vertreter: **Patentanwälte Dipl.- Ing. A. Grünecker, Dr.- Ing. H. Kinkeldey, Dr.- Ing. W. Stockmair,, Dr. rer. nat. K. Schumann, Dipl.- Ing. P.H. Jakob, Dr. rer. nat. G. Bezold Maximilianstrasse 58, D-8000 München 22 (DE)**

EP 0 027 575 B2

LIBER, STOCKHOLM 1989

**Beschreibung**

Die Erfindung bezieht sich auf eine Vorrichtung zum Regeln der Förderleistung eines Extruders mit einer zwei- oder mehrteiligen Blasform gemäss dem ersten Teil des Anspruchs 1.

Aus der DE-B2-2 544 171 ist ein Verfahren bekannt, bei dem mittels einer Lichtschranke festgestellt wird, wann der Vorformling seine Soll-Länge erreicht hat, um genau zu diesem Zeitpunkt die Blasform zu schliessen. Eine Regelung sorgt dafür, dass dieser Zeitpunkt immer erst dann erreicht wird, wenn die Blasform auch zur Betätigung bereit ist. In dieser Regelung wird festgestellt, ob der Zeitpunkt, zu dem der Vorformling seine Soll-Länge erreicht, oberhalb oder unterhalb eines vorgegebenen Zeitbereiches liegt, der bezüglich seines unteren Grenzwertes um eine Formwartezeit gegenüber dem Zeitpunkt verschoben ist, zu dem die Blasform wieder zu schliessen bereit ist. In Abhängigkeit von dieser Feststellung wird die Drehzahl des Extruders um einen vorgegebenen, von der Regelabweichung unabhängigen Wert erhöht oder erniedrigt, wodurch erreicht wird, dass nach einem oder mehreren Zyklen der Zeitpunkt, zu dem der Vorformling seine Soll-Länge erreicht, in den genannten Zeitbereich fällt. Solange er in diesem Zeitbereich bleibt, findet keine Änderung der Extruderdrehzahl statt. Ein im Prinzip gleiches Verfahren geht aus der DE-B2-2 544 609 hervor. In dieser Veröffentlichung ist auch ein Programmgeber beschrieben, der üblicherweise dazu verwendet wird, die Austrittsöffnung des Strangpresskopfes während des Austritts des Vorformlings zu variieren, um seine Wanddicke über seine Länge unterschiedlich zu gestalten. Dieses bekannte Verfahren zum Betrieb des Extruders und der ihm zugeordneten Blasform hat den Nachteil, dass zur Inbetriebnahme der Maschine die untere und die obere Grenze des genannten Zeitbereichs relativ zu dem Zeitpunkt, zu dem die Blasform wieder bereit ist, eingestellt werden müssen. Die Wahl dieser Grenzwerte setzt voraus, dass die Bedienungsperson ausreichende Erfahrung mit dem zu verarbeitenden Kunststoff besitzt, da nur bei Kenntnis dieser Parameter eine zufriedenstellende Arbeitsweise der Maschine sichergestellt werden kann. Der Zeitbereich, in dem keine Änderung der Drehzahl des Extruders erfolgen soll, kann nicht zu kurz gewählt werden, da diese Regelung sonst instabil wird. Ferner muss bei dieser Regelung die Formwartezeit relativ lang bemessen werden, um sicherzustellen, dass die Form auch bei grösseren Regelabweichungen auf jeden Fall bereits wieder bereit ist, wenn der Vorformling seine Soll-Länge erreicht. Dadurch ergeben sich relativ grosse Totzeiten, die die Arbeitsweise der Maschine in unerwünschter Weise verlangsamen.

Der vorliegenden Erfindung liegt die Aufgabe zugrunde, ein Vorrichtung anzugeben, die keine unnötigen Formwartezeiten erforderlich macht. Diese Aufgabe wird mit den Merkmalen des Anspruchs 1 gelöst. Bei der angegebenen Vorrichtung wird als Regelabweichung die Zeitdifferenz zwischen Auftreten des verzögerten Formbereitschaftssignals und des Zeitpunktes zu dem der Vorformling seine Soll-Länge erreicht, nicht nur nach seinem Vorzeichen, sondern nach Vorzeichen und Grösse benutzt. Diese Regelung erweist sich als sehr schnell und stabil, so dass nur eine ganz geringe Formwartezeit in Kauf genommen werden muss. Dadurch, dass diese Formwartezeit kontinuierlich veränderbar ist, kann sie den Bedürfnissen des Einzelfalles genügend auf einfache Weise auf einen minimalen Wert eingestellt werden. Zur Inbetriebnahme der Regelung ist nur diese Einstellung erforderlich, was ihre Benutzung sehr einfach gestaltet.

Anspruch 2 beinhaltet eine sehr einfache Massnahme zur kontinuierlichen Einstellung der Formwartezeit.

Eine bevorzugte Weiterbildung ist im Anspruch 3 angegeben. Dadurch wird erreicht, dass geringe Regelabweichungen unberücksichtigt bleiben und Änderungen der Förderleistung nicht bei jedem Arbeitszyklus erfolgen.

Anspruch 4 trägt einer Maschine Rechnung, bei der ein vorgegebenes Programm für die Wanddicke des Vorformlings benutzt wird. Ohne die Massnahme dieses Anspruchs konnte folgender Nachteil auftreten. Bei einer Änderung der Förderleistung des Extruders wird im ersten Zyklus nach Auftreten dieser Änderung eine Regelabweichung auftreten, die im zweiten Zyklus wieder rückgängig gemacht wird. Wird die Programmablaufzeit nicht schnell genug an diese Änderungen angepasst, wird nicht nur im ersten Zyklus, sondern auch noch im zweiten ein Programmfehler auftreten. Bei grösseren Veränderungen der Extruderdrehzahl kann es sogar vorkommen, dass die letzten Punkte des Wanddickenprogrammierers gar nicht mehr abgefragt werden, wodurch Ausschussware entstehen kann.

Die Massnahme des Anspruchs 5 trägt dem Bedürfnis Rechnung, dass die Lichtschranke nicht in allen Fällen an der Stelle vorgesehen werden kann, an der das Ende des fertigen Vorformlings zu liegen kommt. Dies ist beispielsweise nicht möglich, bei Maschinen, die mit Blas- oder Spreizdornen arbeiten.

Die Massnahme nach dem Anspruch 6 führt zu dem Vorteil, dass grössere Abweichungen, die beispielsweise bei einer Maschinenstörung oder beim Maschinenanlauf auftreten, zu keiner unnötigen Regelung führen, die das Einstellen der Maschine erschweren könnten.

Anhand eines in der Zeichnung dargestellten Ausführungsbeispiels wird die Erfindung im folgenden näher erläutert. Es zeigen:

Fig. 1 ein Schaltbeispiel des Teils der erfindungsgemässen Regelung, der sich auf die Erzeugung des Regelsignals bezieht;

Fig. 2 ein Zeitdiagramm für in dem Schaltbeispiel nach Fig. 1 auftretende Spannungsverläufe für den Fall, dass die Blasform bereits bereit ist, während der Vorformling noch nicht ganz extrudiert ist, und

Fig. 3 ein Zeitdiagramm entsprechend demjenigen nach Fig. 2, für den Fall, dass der Vorformling bereits fertig ist, bevor die Blasform betätigt werden kann.

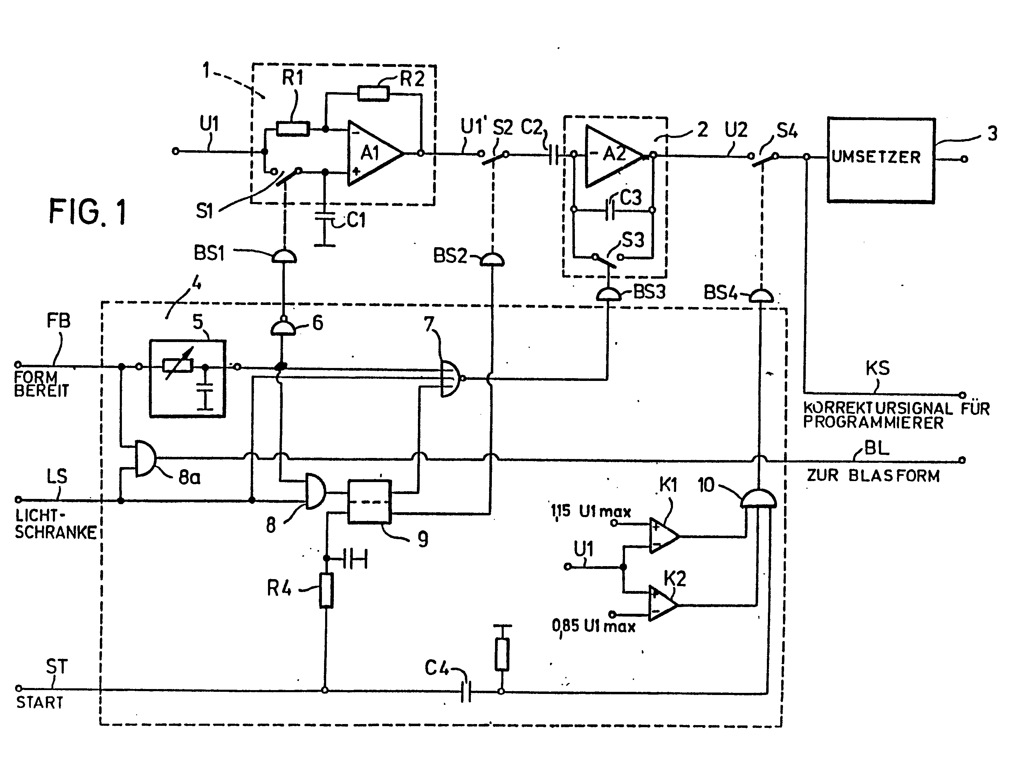

Die in Fig. 1 dargestellte Schaltung enthält nur denjenigen Teil der Regelung, der sich auf die Erzeugung des Regelabweichsignals bezieht. Die zum vollständigen Extruder und seiner Steuerung gehörenden übrigen Teile sind herkömmlicher Art und hier nicht näher beschrieben. Bis auf die in der vorliegenden Anmeldung beschriebenen Besonderheiten kann die Regelung in der Art ausgeführt sein, wie sie in der DE-A1-2 804 145 beschrieben ist.

Die dargestellte Schaltung besteht im wesentlichen aus der Kettenschaltung einer Vorzeichenstufe 1, eines Schalters S2, einer aus einem Kondensator C2 bestehenden Differenzierstufe, einer Integrationsstufe 2, einem Schalter S4, einem Umsetzer 3 und der zur Steuerung dieser Schaltungsteile dienenden logischen Schaltung 4.

Die Vorzeichenstufe 1 besteht aus einem Operationsverstärker A1 dessen invertierender Eingangsanschluss über einen Widerstand R1 und dessen nichtinvertierender Eingang über einen Schalter S1 mit einem Eingangsanschluss dieser Vorzeichenstufe 1 verbunden ist, dem eine Spannung U1 zugeführt wird. Der nichtinvertierende Eingang des Operationsverstärkers A1 ist über einen Kondensator C1 geerdet. Der invertierende Eingang ist über einen Widerstand R2 mit dem Ausgangsanschuss des Operationsverstärkers A1 verbunden, an dem eine Spannung U1' anliegt. Die Integrationsstufe besteht aus einem weiteren Operationsverstärker A2, dem sowohl ein Kondensator C3, als auch ein Schalter S3 parallel geschaltet sind. Der Umsetzer 3 ist über den Schalter S4 mit dem Ausgang der Integrationsstufe 2 verbunden. Er liefert ausgangsseitig das Regelabweichsignal für die Geschwindigkeitsregelung der Fördereinrichtung des Extruders, die beispielsweise als Motor für einen Schneckenantrieb ausgebildet ist, der dem Strangpresskopf das zu extrudierende Material zuführt. An den Eingangsanschluss des Umsetzers 3 ist eine Leitung KS angeschlossen, die mit dem Programmierer des Extruders verbunden ist und ein Korrektursignal für den Programmierer liefert, wie es weiter unten noch beschrieben wird.

Die an den oben beschriebenen Schaltungsteil angeschlossene logische Schaltung 4 ist mit vier Eingangsanschlüssen versehen, denen Signale FB (Form bereit), LS (Lichtschranke), ST (Startsignal) und U1 (Rampensignal) zugeführt werden. Das Signal FB wird von der Blasform abgegeben, wenn sie für den Blasformvorgang geschlossen werden kann. Das Signal LS stammt von einer Lichtschranke und tritt dann auf, wenn der Vorformling seine Soll-Länge erreicht hat. Das Signal U1 stellt das Rampensignal dar, das auch der Vorzeichenstufe 1 eingangsseitig zugeführt wird. Der besseren Verständlichkeit wegen werden die diese Signale führenden Eingangsanschlüsse der logischen Schaltung 4 mit denselben Bezeichnungen wie die Signale selbst versehen.

Die Schalter S1, S2, S3 und S4 sind jeweils mit Betätigungsgliedern BS1, BS2, BS3 und BS4 versehen, die diese Schalter jeweils dann in ihren geschlossenen Zustand überführen, wenn ihnen eingangsseitig eine "logische 1" zugeführt wird. Der FB-Anschluss ist mit einer Verzögerungsschaltung 5 verbunden, deren Funktion weiter unten erläutert wird. Der Ausgang der Verzögerungsschaltung 5 ist über einen Inverter 6 mit dem Betätigungsglied BS1 verbunden. Weiterhin ist der Ausgang der Verzögerungsschaltung 5 verbunden mit dem einen von drei Eingängen eines Verknüpfungsglieds 7 und dem einen von zwei Eingängen eines UND-Verknüpfungsglieds 8. Der LS-Eingang ist mit dem anderen Eingang des UND-Verknüpfungsglieds 8 und dem zweiten Eingang des Verknüpfungsglieds 7 verbunden. Der Ausgang des UND-Verknüpfungsglieds 8 ist angeschlossen an den SET-Eingang eines Flip-Flops 9, dessen RESET-Eingang über einen Widerstand R4 am ST-Eingang liegt. Der Q-Ausgang des Flip-Flops 9 ist mit dem dritten Eingang des Verknüpfungsglieds 7 verbunden und sein Q-Ausgang mit dem Betätigungsglied BS2. Der Ausgang des Verknüpfungsglieds 7 liegt am Betätigungsglied BS3. Der Eingang des Betätigungsglieds BS4 liegt am Ausgang eines UND-Verknüpfungsglieds 10 mit drei Eingängen, deren erster über einen Kondensator C4 mit dem ST-Eingang verbunden ist und deren beide andere Eingänge jeweils mit dem Ausgang eines Komparators K1 und K2 verbunden sind. Jeweils einem Eingang der Komparatoren K1 und K2 wird das Rampensignal U1 zugeführt, während die beiden anderen verbleibenden Eingänge Spannungen erhalten, die einen vorgegebenen Wert von beispielsweise 15 % über oder unter dem Soll-Endwert des Rampensignals liegen. Bei einem Soll-Endwert von 10 V liegen diese Spannungen bei 11,5 V und 8,5 V. Die Leitungen FB und LS sind an ein UND-Verknüpfungsglied 8a angeschlossen, dessen Ausgang mit einer Leitung BL verbunden ist, die zur Blasform führt und dieser das Startsignal zum Schliessen gibt.

Im folgenden wird die Wirkungsweise der oben im Aufbau beschriebenen Schaltung erläutert. Die beiden Signale FB und LS geben bei ihrem Auftreten an, dass sowohl die Form für den Schliessvorgang bereit ist, als auch, dass der Vorformling seine Soll-Länge erreicht hat. Diese Signale werden dem UND-Verknüpfungsglied 8a zugeführt, das am Ausgang nur dann ein Signal abgibt, wenn beide Bedingungen erfüllt sind, so dass sichergestellt ist, dass die Form nur dann geschlossen wird, wenn sie selbst bereit ist und der Vorformling seine Soll-Länge erreicht hat. Dieses Signal wird über die Leitung BL der Blasform zugeführt, die den Schliessvorgang dieser Form einleitet.

Die in der Zeichnung dargestellte Schaltung erzeugt ein Regelausgangssignal am Umsetzer 3, das proportional ist der Zeitdifferenz zwischen dem Auftreten der Signale LS und FB. Diese Regelabweichsignal wird benutzt, um die Fördereinrichtung des Extruders nachzustellen, so dass im Idealfall der Vorformling gerade dann seine Soll-Länge erreicht hat, wenn die Blasform für den Schliessvorgang bereit ist. Bei dieser Regelung bildet die Zykluszeit, mit der die Blasform arbeitet, den Sollwert, auf den sich die Zykluszeit, in der der Vorformling seine Soll-Länge erreichen soll, einstellt. Bei einer solchen Regelung kann es vorkommen, dass der Ist-Wert den Sollwert unterschreitet, was hier bedeuten würde, dass der Vorformling seine Soll-Länge erreicht bevor die Form wieder bereit ist. Um die Form aber nur dann zu schliessen, wenn sie auch bereit ist, ist eine Logikschaltung vorgesehen, die diesem Fall Rechnung trägt. Es könnte stattdessen auch die Betätigungsvorrichtung für die Form so ausgebildet sein, dass sie auf ein Betätigungssignal erst anspricht, wenn sie für den neuen Zyklus bereit ist

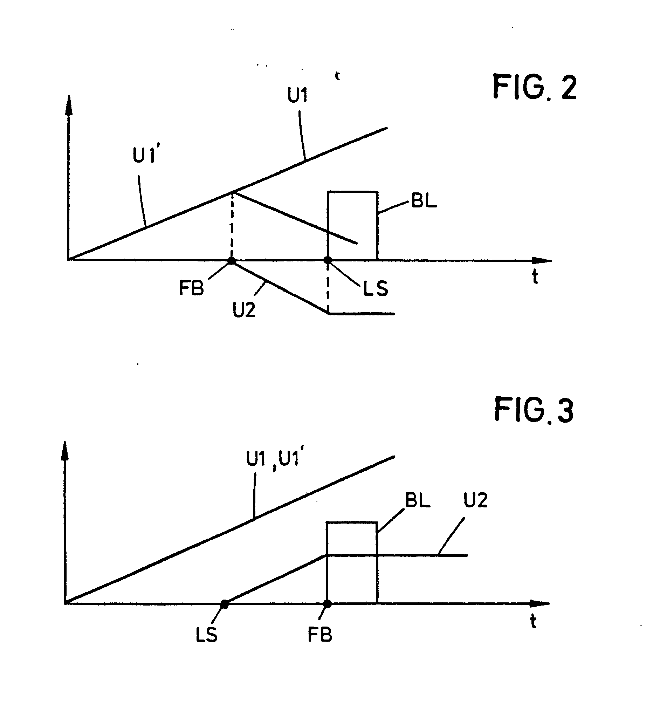

Betrachten wir zunächst den ersten Fall, dass die Blasform bereits für den Schliessvorgang bereit ist, bevor der Vorformling seine Soll-Länge erreicht hat. In den beiden nachstehend beschriebenen Fällen ist die durch das Potentiometer 5 einstellbare Formwartezeit auf den Wert "null" eingestellt. Die Regelung ist also so eingestellt, dass sie den Zeitpunkt, zu dem der Vorformling seine Soll-Länge erreicht, genau auf den Zeitpunkt legt, zu dem die Blasform gerade wieder zum Schliessen bereit ist. In dem ersten Fall einer zu betrachtenden Regelabweichung erscheint das Signal FB vor dem Signal LS. Zu Beginn des Arbeitszyklus wird das Signal ST erzeugt, das das Flip-Flop 9 rücksetzt. Dadurch wird über das Betätigungsglied BS2 der Schalter S2 geschlossen. Der Fall, dass einer der beiden Komparatoren K1 und K2 kein Ausgangssignal abgibt, sei vorläufig noch ausser Betracht gelassen. Da das Signal FB noch nicht ansteht, wird über den Inverter 6 und das Betätigungsglied BS1 auch der Schalter S1 geschlossen. Dem Eingang der Vorzeichenstufe 1 wird das Rampensignal U1 zugeführt, das in üblichen Extrudern dazu verwendet wird, den Programmierer zeitabhängig zu steuern. Die Spannung U1' im Ausgang der Vorzeichenstufe 1 hat bis zum Eintreffen des Signals FB denselben Verlauf wie das Rampensignal U1. Solange der Schalter S3 geschlossen ist, erzeugt die Integrationsstufe 2 kein Ausgangssignal. Dieser Schalter S3 wird über das Betätigungsglied BS3 durch das Verknüpfungsglied 7 dann und nur dann geschlossen, wenn die dem Verknüpfungsglied 7 eingangsseitig zugeführten drei Signale alle entweder eine logische 0 oder eine logische 1 haben. Vor dem Eintreffen der beiden Signale FB und LS ist diese Bedingung erfüllt, da auch das Flip-Flop 9 kein Ausgangssignal am Q-Ausgang liefert. Trifft nun das Signal FB ein, werden gleichzeitig die Schalter S1 und S3 geöffnet. Das Ausgangssignal U1' der Vorzeichenstufe 1 knickt nun nach unten um, wie dies aus Fig. 2 ersichtlich ist. Durch den Kondensator C2 erhält die Integrationsstufe 2 ein negatives Eingangssignal, das am Ausgang gemäss folgender Bezeichnung erscheint.

$$U_2 = -\tfrac{C_2}{C_3} \int \tfrac{dU_1'}{dt}\, dt$$

Dieses Signal ist mit U2 bezeichnet und in Fig. 2 dargestellt. Trifft nach einer gewissen Zeit dann auch das Signal LS ein, wird das Flip-Flop 9 durch das UND-Verknüpfungsgied 8 umgeschaltet, so dass dem zugehörigen Eingang des Verknüpfungsglieds 7 eine logische 1 zugeführt wird und damit alle drei Eingänge dieses Verknüpfungsglieds 7 eine logische 1 erhalten. Als Folge davon wird nun der Schalter S3 wieder geschlossen und die am Ausgang der Integrationsstufe 2 anstehende Spannung ist ein Mass für die Zeitdifferenz zwischen dem Eintreffen der beiden Signale FB und LS. Diese Spannung wird dem Umsetzer 3 zugeführt, der in diesem Fall, wo die Regelabweichung negativ ist, dafür sorgt, dass die Fördereinrichtung des Extruders auf hohe Förderleistung gebracht wird.

Im zweiten Fall, der in einem Zeitdiagramm in Fig. 3 dargestellt ist, soll der Vorformling bereits zu einem Zeitpunkt fertig sein, in dem die Blasform noch nicht wieder zum Schliessen bereit ist. In diesem Fall tritt das Signal LS vor dem Signal FB auf. Bis zum Eintreffen des Signal LS entspricht dieser Fall dem obigen ersten Fall. Bei Entreffen des Signals LS wird der Schalter S3 geöffnet.

Da im Gegensatz zum ersten Fall bis zum Eintreffen des Signals FB der Schalter S1 geschlossen bleibt, steigt das Signal U1' kontinuierlich an, so dass die Spannung U2 am Ausgang der Integrationsstufe 2 positive Werte annimmt, deren Endwert wiederum von der Zeitdauer zwischen dem Eintreffen der Signale LS und FB bestimmt wird. Der Endwert wird erreicht, wenn der Schalter S3 geschlossen wird, was wiederum dann der Fall ist, wenn die beiden Signale FB und LS gleichzeitig am Verknüpfungsglied 7 anliegen.

Bei vollständig ausgeregeltem Regelkreis arbeitet die Fördereinrichtung des Extruders mit einer Geschwindingkeit, die dazu führt, dass die beiden Signale LS und FB gleichzeitig auftreten, was bedeutet, dass der Vorformling seine Soll-Länge gerade dann erreicht, wenn die Blasform zum Schliessen bereit ist. Man kann die Blasform deshalb mit maximaler Geschwindigkeit arbeiten lassen, und die Fördereinrichtung des Extruders passt sich automatisch an die Geschwindigkeit ohne Auftreten irgendwelcher Wartezeiten an. Da positive Regelabweichungen allerdings zu dem Ergebnis führen, dass der Vorformling seine Soll-Länge bereits zu einem Zeitpunkt erreicht, in dem die Blasform noch nicht wieder bereit ist und auch in diesem Fall die Blasform erst dann betätigt werden kann, wenn sie dazu bereit ist, wird der Vorformling um eine der Regelabweichung entsprechende Grösse zu lang. Um diesem Fall entgegenzuwirken, ist der Verzögerungskreis 5 vorgesehen. Stellt man diesen Verzögerungskreis 5 beispielsweise auf eine Sekunde, stellt sich die Regelung so ein, dass die Soll-Länge des Vorformlings erst dann erreicht wird, wenn die Blasform bereits eine Sekunde auf "Bereitschaft" stand. Der Verzögerungskreis 5 enthält vorzugsweise ein Potentiometer, mit dem die Verzögerungszeit einstellbar ist. Negative Regelabweichungen, die kleiner als die Grösse der eingestellten Zeitspanne To sind, können deshalb nicht dazu führen, dass der Vorformling zu lang wird.

Für manche Betriebsfälle erscheint es sinnvoll, die Regelung ausser Kraft zu setzen, beispielsweise bei einer Maschinenstörung. In diesem Fall liefern die Komparatoren K1 und K2, die das ihnen eingangsseitig zugeführte Rampensignal U1 mit den Extremwertsignalen vergleichen, ausserhalb denen die Regelung ausser Kraft gesetzt werden soll, kein Ausgangssignal, wodurch der Schalter S4 geöffnet wird. Das Regelabweichsignal wird deshalb dem Antrieb für die Förderschnecke des Extruders nicht zugeführt.

Das Regelabweichsignal wird über die Leitung KS als Korrektursignal auch dem Programmgeber des Extruders zugeleitet, um sicherzustellen, dass der Programmablauf für den Wandstärkenverlauf auf die Zykluszeit abgestellt wird.

## Patentansprüche

1. Vorrichtung zum Regeln der Förderleistung eines Extruders mit einer zwei- oder mehrteiligen Blasform, in der der aus einem Strangpreßkopf ausgestoßene Vorformling zum gewünschten Hohlkörper aufgeweitet wird, die die Blasform betätigt, nachdem der Vorformling seine Soll-Länge erreicht hat, und die Förderleistung derart regelt, daß die Soll-Länge des Vorformlings zu einem Zeitpunkt erreicht wird, nachdem die Blasform zur Betätigung bereit ist, und bei der ein Formbereitschaftssignal (FB) und ein Lichtschrankensignal (LS) das bei Erreichen der Soll-Länge des Vorformlings entsteht, für die Drehzahländerung des Extruders dienen, und die eine verstellbare Verzögerungseinrichtung (5) für das Formbereitschaftssignal sowie eine Einrichtung aufweist, welche die Zeitdifferenz zwischen dem Auftreten des verzögerten Formbereitschaftssignals und dem Lichtschrankensignal (LS) ermittelt, dadurch gekennzeichnet, daß der sich aus der Differenz des verzögerten Formbereitschaftssignals und des Lichtschrankensignals (LS) ergebende Wert nach Vorzeichen und Größe das Maß für die Nachregelung des Extrudersantriebes darstellt, unabhängig davon, welches von den beiden Signalen (FB und LS) zeitlich als erstes entsteht, und daß eine Einrichtung (8a) vorgesehen ist, welche ebenfalls unabhängig von der zeitlichen Reihenfolge dieser Signale (FB und LS) sicherstellt, daß die Blasform nur dann geschlossen wird, wenn sowohl die Blasform selbst bereit ist als auch der Vorformling seine Soll-Länge erreicht hat.

2. Vorrichtung nach Anspruch 1, dadurch gekennzeichnet, daß sie zum Einstellen der Formwartezeit ein Potentiometer aufweist.

3. Vorrichtung nach Anspruch 1 oder 2, dadurch gekennzeichnet, daß sie so ausgebildet ist, daß die Regelung außer Kraft gesetzt wird, wenn die Abweichung zwischen Soll- und Ist-Wert unter einem vorgegebenen Wert liegt.

4. Vorrichtung, bei der ein vorgegebenes Programm für die Wanddicke des Vorformlings benutzt wird, nach einem der Ansprüche 1 bis 3, dadurch gekennzeichnet, daß sie so ausgebildet ist, daß mit einer Veränderung der Förderleistung die Programm-Zykluszeit für den darauffolgenden Zyklus verändert wird.

5. Vorrichtung nach einem der Ansprüche 1 bis 4, dadurch gekennzeichnet, daß die Lichtschranke eine vorgegebene Strecke vor der Stelle angeordnet ist, an der sich das Ende des Vorformlings befindet, wenn er seine Soll-Länge erreicht hat, und daß die Vorrichtung so ausgebildet ist, daß auf die Zeit, zu der der Vorformling seine Soll-Länge erreicht, extrapoliert wird.

6. Vorrichtung nach einem der Ansprüche 1 bis 5, dadurch gekennzeichnet, daß sie so ausgebildet ist, daß die Regelung außer Kraft gesetzt wird, wenn das Verhältnis aus der Regelabweichung zur Zykluszeit für die Blasform einen vorgegebenen Wert, vorzugsweise 0,15, überschreitet.

## Claims

1. A system for controlling the delivery of an extruder comprising a blowing mould which is in two or more parts and in which a blank ejected from an extrusion head is expanded to form the required hollow body, the blow mould being actuated after the blank has reached its set-value length, delivery being so controlled that the set-value length of the blank is reached at a time after the blow mould is ready for actuation, a mould-ready signal (FB) and a light barrier signal (LS), the latter arising in response to the blank reaching its set-value length, being operative to vary the speed of the extruder, the system having an adjustable delay facility (5) for the mould-ready signal and means for detecting the time difference between the occurrence of the delayed mould-ready signal and the light barrier signal (LS), characterised in that, depending on its sign and magnitude, the value resulting from the difference between the delayed mould-ready signal and the light barrier signal (LS) represents the follow-up value for the extruder drive irrespective of which of the two signals (FB and LS) occurs first, and means (8a) are provided which ensure, again irrespective of the sequence of the mould barrier signal (FB) and light barrier signal (LS) in time, that the mould closes only both when the mould itself is ready and also when the blank has reached its set-value length.

2. A system according to claim 1, characterised in that it has a potentiometer to adjust mould waiting time.

3. A system according to claim 1 or 2, characterised in that it is so devised that the control becomes inoperative when the variation between the actual value and the set value is below a predetermined value.

4. A system in which a preset program is used for the wall thickness of the blank according to any of claims 1 - 3, characterised in that it is so devised that a change in delivery changes the program cycle time for the next cycle.

5. A system according to any of claims 1 - 4, characterised in that the light barrier is disposed at a predetermined distance before the place where the blank end is disposed when the blank has reached its set-value position, and the system is such that an extrapolation is made to the time at which the blank reaches its set-value length.

6. A system according to any of claims 1 - 5, characterised in that it is so devised that the control becomes inoperative when the ratio of the control variation to the cycle time for the blowing mould overshoots a predetermined value, preferably 0.15.

**Revendications**

1. Dispositif pour régler la capacité de production d'une extrudeuse munie d'un moule de soufflage en deux ou plusieurs parties dans lequel on dilate la préforme éjectée d'une tête d'extrusion pour en tirer le corps creux désiré, le moule de soufflage étant actionné lorsque la préforme a atteint sa longueur de consigne et qui règle le débit de façon à ce la longueur de consigne de la préforme soit atteinte à un moment, après que le moule de soufflage est prêt à l'actionnement, et dans lequel un signal de disponibilité de moule (FB) et un signal de barrage photoélectrique (LS) qui apparait lorsque la longueur de consigne de la préforme est atteinte servent à la modification de la vitesse de rotation de l'extrudeuse, et qui présente un dispositif de retardement (5) réglable pour le signal de disponibilité du moule, ainsi qu'un dispositif qui détermine la différence de temps entre l'apparition du signal retardé de disponibilité du moule et le signal de barrage photoélectrique (LS), caractérisé par le fait que l'on utilise comme valeur de régulation de l'entraînement d'extrudeuse une valeur, en grandeur et en signe, dont la grandeur correspond à la différence entre le signal retardé de disponibilité de moule et le signal de barrage photoélectrique (LS), indépendamment du fait que l'un de ces deux signaux (FB et LS) est chronologiquement apparu le premier et en ce qu'il est prévu un dispositif (8a) qui assure, également indépendamment de la succession chronologique de ces signaux (FB et LS), que le moule de soufflage est alors fermé lorsqu'aussi bien le moule de soufflage lui-même qu'également la préforme ont atteint leur longueur de consigne.

2. Dispositif selon la revendication 1, caractérisé en ce que pour ajuster le temps d'attente de moule on utilise un potentiomètre.

3. Dispositif selon la revendication 1 ou 2, caractérisé par le fait que l'on met hors d'action la régulation quand l'écart entre la valeur de consigne et la valeur réelle est inférieur à une valeur prescrite.

4. Dispositif dans lequel est utilisé un programme prédéterminé pour l'épaisseur de paroi de la préforme, selon l'une des revendications 1 à 3, caractérisé en ce qu'il est réalisé de sorte que temps de cycle du programme pour le cycle suivant est modifié par une modification du débit.

5. Dispositif selon l'une des revendications 1 à 4, caractérisé en ce que la barrage photoélectrique est disposé sur un tronçon situé avant l'endroit auquel se trouve l'extrémité de la préforme, lorsqu'elle a atteint sa longueur de consigne et en ce que le dispositif est réalisé de telle sorte que l'on extrapole le moment auquel la préforme atteint sa longueur de consigne.

6. Dispositif selon l'une des revendications 1 à 5, caractérisé par le fait que l'on met la régulation hors service lorsque le rapport entre l'écart de régulation et le temps de cycle pour le moule de soufflage dépasse une valeur prédéterminée, de préférence 0,15.

FIG. 1

EP 0 027 575 B2

FIG. 2

FIG. 3